# EUROPEAN PATENT APPLICATION

(11) **EP 2 006 983 A2**
(43) Date of publication of application: **24.12.2008**
(21) Application number: 07740432.5
(22) Date of filing: 29.03.2007
(51) Int. Cl.: H02K 29/08, H02K 1/27, H02K 16/02, H02K 21/16

(54) **MAGNET BRUSHLESS GENERATOR AND MAGNET BRUSHLESS STARTER**

(30) Priority: 29.03.2006 JP 2006092369
(71) Applicant: Shinko Electric Co., Ltd, Minato-ku, Tokyo 105-8564 (JP)
(72) Inventor: NAKANISHI, Kazumasa, c/o Shinko Electric Co., Ltd.,, Ise-shi, Mie 516-8550 (JP); SETA, Manabu, c/o Shinko Electric Co., Ltd.,, Ise-shi, Mie 516-8550 (JP); WAKITA, Masaya, c/o Shinko Electric Co., Ltd.,, Ise-shi, Mie 516-8550 (JP)
(74) Representative: Grünecker, Kinkeldey, Stockmair & Schwanhäusser Anwaltssozietät
(86) International application number: PCT/JP2007/056994
(87) International publication number: WO 2007/114303

(57) **Abstract**

There is provided a magnet type brushless generator capable of particularly controlling an output voltage to be uniform even in a driving operation at a variable rpm from a low-speed rotation to a high-speed rotation.

The magnet type brushless generator includes a stator 20 having a plurality of stator magnetic poles around which winding wires for generating a rotation magnetic field are wound; a rotor 30 having a first field magnet 32 and a second field magnet 34 disposed coaxially with the first field magnet 32 in an opposed manner so as to be rotatable relative to the first field magnet; and a planetary gear mechanism 40 configured to control a relative rotation position of the first field magnet 32 and the second field magnet 34.

## Description

### TECHNICAL FIELD

The present invention relates to a magnet type brushless generator and a magnet type brushless starter used for, for example, an engine starter and a generator directly connected to an airplane engine, and more particularly, to a magnet type brushless generator and a magnet type brushless starter capable of uniformly controlling an output voltage as an output of a rotation unit.

### BACKGROUND ART

A magnet type brushless electric motor can obtain high torque in a low-speed rotation area, but has a problem that a high-speed rotation is difficult because a variable range of an rpm is narrow.
Therefore, in a high-speed rotation, a total magnetic flux is made to decrease in terms of a weak field method in order to obtain a high rpm.

However, in the weak field method, it is necessary to monitor numerical values of the torque and the rpm so as to carry out a complex calculation based on the numerical values and to control a magnitude and a phase of current supplied to stator winding wires, and thus a problem arises in that it is necessary to be provided with a complex and high-cost control circuit including a high-speed computer.

Therefore, Patent Document 1 discloses a magnet type brushless electric motor with a simple configuration capable of obtaining high torque at the low rpm like the conventional magnet type brushless electric motor and of generating high torque with high conversion efficiency up to the rpm almost three times higher than that of the known magnet type brushless electric motor.

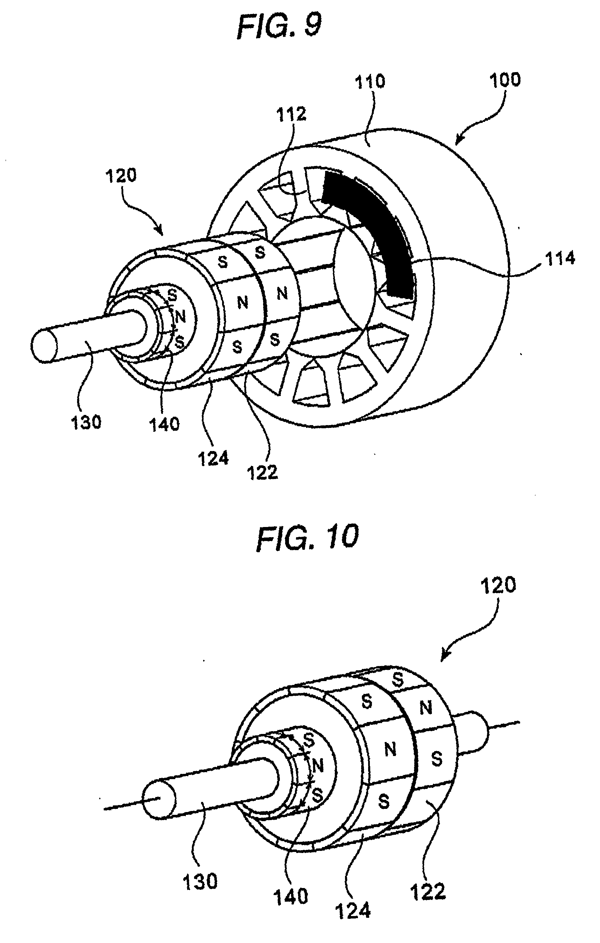

Hereinafter, the magnet type brushless electric motor according to a related art will be described with reference to Figs. 9 and 10.
Fig. 9 is an exploded perspective view illustrating a configuration of the magnet type brushless electric motor according to the related art.
Fig. 10 is an enlarged perspective view illustrating a configuration of a part of the magnet type brushless electric motor according to the related art.

As shown in Figs. 9 and 10, a magnet type brushless electric motor 100 according to the related art includes a stator 110 in which field winding wires 114 are wound around a plurality of stator magnetic poles 112 so as to generate a rotation magnetic field and a rotor 120 which has a first field magnet 124 and a second field magnet 122 configured to be rotatable relative to the first field magnet 124.
In addition, in Figs. 9 and 10, Reference numeral 130 denotes a rotary shaft and Reference numeral 140 denotes a sensor magnet.

With the above-described configuration, as shown in Fig. 9, in the magnet type brushless electric motor 100 according to the related art, an amount of the interlinkage magnetic flux becomes the largest in such a manner that the same magnetic poles of the first and second field magnets 124 and 122 are sequentially arranged when the rpm of the rotor 120 is low.
Meanwhile, as shown in Fig. 10, an efficient amount of the magnetic flux interlinking with the field winding wires 114 on the side of the stator 110 decreases in such a manner that the magnetic poles of the first and second field magnets 124 and 122 are deviated from each other.
Accordingly, in the magnet type brushless electric motor 100 according to the related art, it is possible to obtain a high rpm.
Patent Document 1: Japanese Patent Publication No. 10-155262 A

### DISCLOSURE OF THE INVENTION

### PROBLEMS TO BE SOLVED BY THE INVENTION

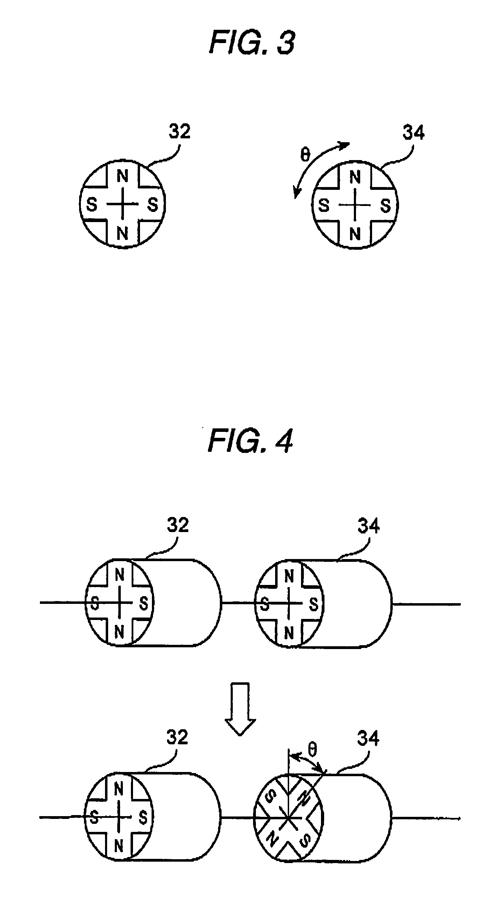

However, in the magnet type brushless electric motor according to the related art disclosed in Patent Document 1, a governor shown in Fig. 3 of Patent Document 1 is used as a mechanism for rotating the magnetic pole of the second field magnet with respect to the magnetic pole of the first field magnet in accordance with the rotation of the rotor.

With this governor, when the rpm of the rotor is low, the same magnetic poles of the second field magnet and the first field magnet are adjusted to be sequentially arranged When the rpm of the rotor becomes high, the governor is opened by a centrifugal force, and the second field magnet rotates with respect to the first field magnet so that the magnetic poles of the first and second field magnets are deviated from each other.
Meanwhile, when the rpm of the rotor 2 becomes low, the centrifugal force becomes small so that the governor is closed by tension of a spring and the same magnetic poles of the first and second field magnets return to be sequentially arranged.

Accordingly, in the magnet type brushless electric motor according to the related art, there is provided a control method for controlling the amount of the interlinkage magnetic flux of the magnet type brushless electric motor by using a simple mechanism in an easy and low-cost manner in that the operation is carried out by the centrifugal force of the rotor, but the magnet type brushless electric motor has the following problems.
(1) First, the field of the first and second field magnets cannot be removed.
(2) Since the control is carried out by the centrifugal force, only a low-speed area field is controlled at a low-speed rotation and only a high-speed area field is controlled at a high-speed rotation.
(3) In a generator in which a load varies in accordance with a variation in rpm of the rotor, the output cannot be controlled.

The present invention solves the above-described problems (drawbacks), and an object of the invention is to provide a magnet type brushless generator and a magnet type brushless starter capable of particularly controlling an output voltage to be uniform even when a driving operation is carried out at a variable rpm from a low-speed rotation to a high-speed rotation.

### MEANS FOR SOLVING THE PROBLEM

According to the invention, there is provided a magnet type brushless generator including: a stator having a plurality of stator magnetic poles around which winding wires for generating a rotation magnetic field are wound; a rotor having a first field magnet and a second field magnet disposed coaxially with the first field magnet in an opposed manner so as to be rotatable relative to the first field magnet; and a planetary gear mechanism configured to control a relative rotation position of the first field magnet and the second field magnet.

The planetary gear mechanism may have a planetary gear connected to the first field magnet and a planetary gear connected to the second field magnet.

Each of the planetary gear connected to the first field magnet and the planetary gear connected to the second field magnet may have an internal gear, and at least one of the internal gears may be attached to an external power mechanism.

The external power mechanism may be a servo motor.

According to the invention, there is provided a magnet type brushless starter including: a stator having a plurality of stator magnetic poles around which winding wires for generating a rotation magnetic field are wound; a rotor having a first field magnet and a second field magnet disposed coaxially with the first field magnet in an opposed manner so as to be rotatable relative to the first field magnet; and a planetary gear mechanism configured to control a relative rotation position of the first field magnet and the second field magnet.

The planetary gear mechanism may have a planetary gear connected to the first field magnet and a planetary gear connected to the second field magnet.

Each of the planetary gear connected to the first field magnet and the planetary gear connected to the second field magnet may have an internal gear, and at least one of the internal gears may be attached to an external power mechanism.

The external power mechanism may be a servo motor.

### ADVANTAGE OF THE INVENTION

According to the above-described configuration, although there is a problem that the magnet type brushless electric motor according to the related art can control only a high-speed area field at a high-speed rotation and only a low-speed area field at a low-speed rotation, the magnet type brushless generator according to this embodiment can freely control the field regardless of the rpm.
As a result, even when the rotor is driven at a variable rpm from a low speed to a high speed, it is possible to uniformly control the output voltage of the generator and to stop the generation during rotation.

According to the above-described configuration, although there is a problem that the magnet type brushless electric motor according to the related art can control only a high-speed area field at a high-speed rotation and only a low-speed area field at a low-speed rotation, the magnet type brushless starter according to this embodiment can freely control the field regardless of the rpm.
As a result, it is possible to freely control a torque-rpm (T-N) characteristic of the starter from a start to a high-speed rotation of the rotor.

### BRIEF DESCRIPTION OF THE DRAWING

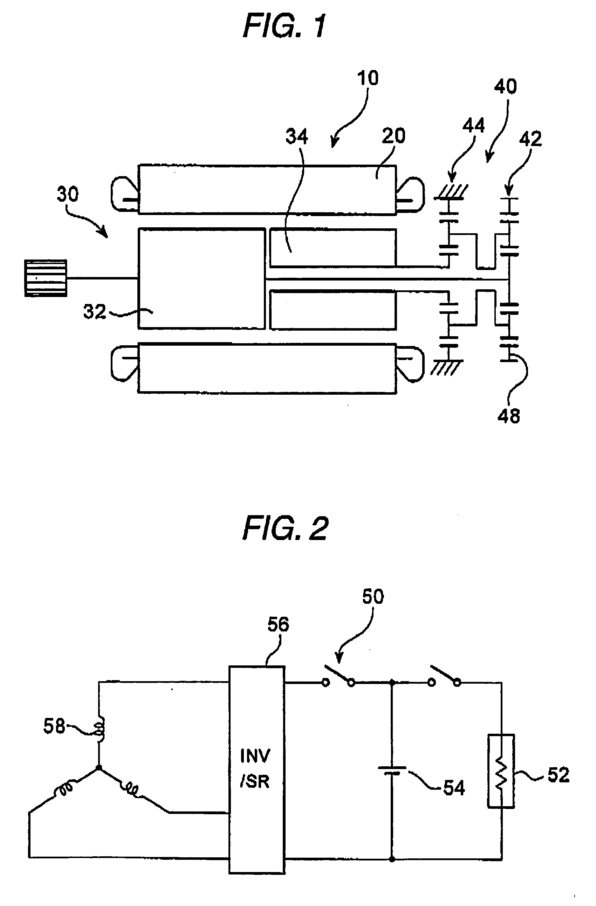

[Fig. 1] Fig. 1 is a longitudinal side view illustrating a configuration of a magnet type brushless generator according to an embodiment of the invention.
[Fig. 2] Fig. 2 is a circuit diagram illustrating a control system of the magnet type brushless generator according to the embodiment of the invention.
[Fig. 3] Fig. 3 is a side view illustrating a configuration of a part of the magnet type brushless generator according to the embodiment of the invention.
[Fig. 4] Fig. 4 is a perspective view illustrating a weak field method of the magnet type brushless generator according to the embodiment.

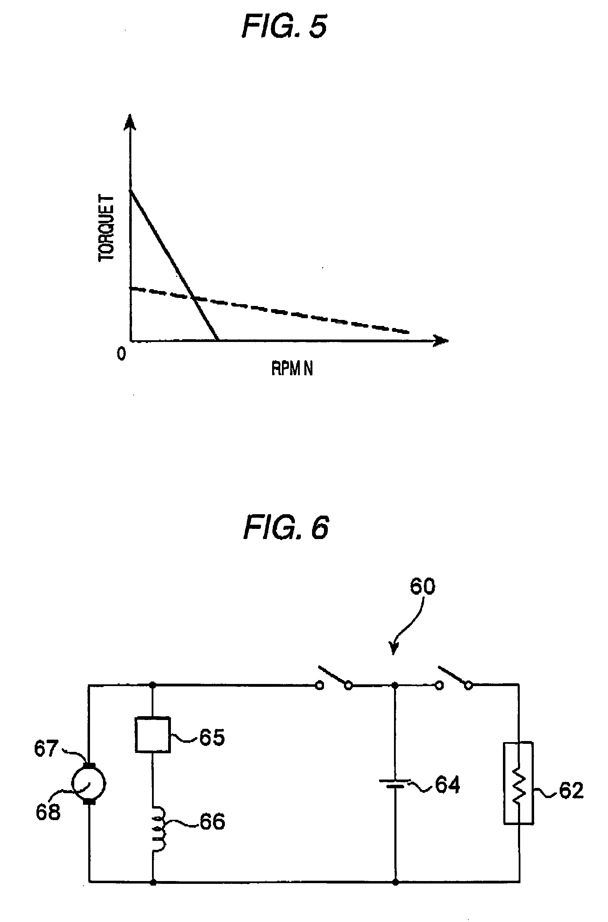

[Fig. 5] Fig. 5 is a T-N characteristic diagram when the magnet type brushless generator according to the embodiment of the invention is used as a starter.
[Fig. 6] Fig. 6 is a circuit diagram illustrating a control system of a brush generator according to a related art.

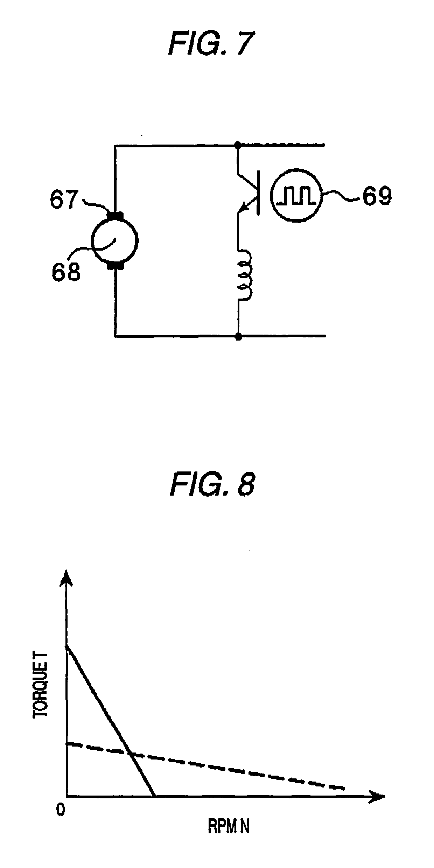

[Fig. 7] Fig. 7 is a circuit diagram illustrating a weak field method of the brush generator according to the related art.
[Fig. 8] Fig. 8 is a T-N characteristic diagram when the brush generator according to the related art is used as a starter.
[Fig. 9] Fig. 9 is a perspective view illustrating a configuration of a magnet type brushless electric motor according to the related art.
[Fig. 10] Fig. 10 is an enlarged perspective view illustrating a configuration of a part of the magnet type brushless electric motor according to the related art.

### DESCRIPTION OF REFERENCE NUMERALS AND SIGNS

- 10:: MAGNET TYPE BRUSHLESS GENERATOR
- 20:: STATOR
- 30:: ROTOR
- 32:: FIRST FIELD MAGNET
- 34:: SECOND FIELD MAGNET
- 40:: PLANETARY GEAR MECHANISM
- 42:: FIRST-STAGE PLANETARY GEAR
- 44:: SECOND-STAGE PLANETARY GEAR
- 48:: INTERNAL GEAR

### BEST MODE FOR CARRYING OUT THE INVENTION

Hereinafter, a magnet type brushless generator according to an embodiment of the invention will be described with reference to Figs. 1 to 8.

First, a basic configuration of the magnet type brushless generator according to this embodiment will be described with reference to Figs. 1 and 3.
In a magnet type brushless generator 10 according to this embodiment, a stator 20 includes a plurality of stator magnetic poles (not shown) around which winding wires are wound so as to generate a rotation magnetic field.
Next, a rotor 30 includes a first field magnet 32 in which magnetic poles having different polarities are sequentially arranged in a rotation direction and a second field magnet 34 which is disposed coaxially with the first field magnet 32 in an opposed manner so as to be rotatable relative to the first field magnet 32.

Meanwhile, the magnet type brushless generator 10 according to this embodiment includes a planetary gear mechanism 40 for controlling relative rotation positions of the first field magnet 32 and the second field magnet 34, and it is possible to control a relative rotation position of the first field magnet 32 and the second field magnet 34 in terms of the planetary gear mechanism 40.

Specifically, the planetary gear mechanism 40 is a two-stage structure provided with a first-stage planetary gear 42 connected to the first field magnet 32 and a second-stage planetary gear 44 connected to the second field magnet 34.
By attaching an external power mechanism such as a servo motor (not shown) to an internal gear 48 of the (first-stage) planetary gear 42 in the planetary gear mechanism 40 having the two-stage structure, the relative rotation position of the first field magnet 32 with respect to the second field magnet 34 is controlled within a necessary rotation range (0 to θ).

Next, a control method of the magnet type brushless generator 10 according to this embodiment will be described with reference to Figs. 2 to 5.
In addition, a control method of the brush generator according to the related art will be described with reference to Figs. 6 to 8 for a comparison therebetween.

For example, as shown in Fig. 6, a control system 60 of a stator of the brush generator according to the related art has a configuration in which a load 62, a DC power source 64, a field controller 65 and a stator winding wire 66, and a rotor 68 and a brush 67 are arranged in parallel, respectively.
Meanwhile, as shown in Fig. 2, a control system 50 of the magnet type brushless generator 10 according to this embodiment has a configuration in which a load 52, a DC power source 54, an inverter 56, and a stator winding wire 58 are arranged in parallel, respectively.

In addition, as a weak field control method, the brush generator according to the related art controls field strength as shown in a T-N characteristic diagram of Fig. 8 in terms of an electric field control method using a pulse-width modulator 69 shown in Fig. 7.
Meanwhile, as mentioned above, the magnet type brushless generator 10 according to this embodiment mechanically controls the internal gear 48 of the first-stage planetary gear 42 by using the external power mechanism.
Accordingly, as shown in Fig. 4, in case of a starter, the field strength is controlled as shown in the T-N characteristic diagram of Fig. 5 in terms of a mechanical field control method for generating a phase difference of the second field magnet 34 with respect to the first field magnet 32.

In addition, in the brush generator according to the related art, as shown in the T-N characteristic diagram of Fig. 8, a solid line indicates a characteristic curve of the full field and a dashed line indicates a characteristic curve of the weak field.
In the same way, in the magnet type brushless generator according to this embodiment, as shown in the T-N characteristic diagram of Fig. 5, a solid line indicates a characteristic curve in a case where a phase difference does not exist between the first field magnet 32 and the second field magnet 34, and a dashed line indicates a characteristic curve of the weak field of the phase difference θ.

With the above-described configuration, next, a basic operation of the magnet type brushless generator 10 according to this embodiment will be described with reference to Fig. 1.
In the magnet type brushless generator 10 according to this embodiment, the relative rotation position of the second field magnet 34 with respect to the first field magnet 32 is controlled in terms of the internal gear 48 of the first-stage planetary gear 42 by using the external power mechanism.

That is, in the magnet type brushless generator 10 according to this embodiment, it is possible to control the relative rotation position of the second field magnet 34 with respect to the first field magnet 32 within a necessary rotation range (0 to θ) regardless of the rpm of the rotor 30 in terms of the external power mechanism.
Accordingly, although there is a problem that the magnet type brushless electric motor according to the related art can control only a high-speed area field at a high-speed rotation and only a low-speed area field at a low-speed rotation, the magnet type brushless generator 10 according to this embodiment can freely control the field regardless of the rpm.

In addition, it is possible to remove the field of the first and second field magnets 32 and 34 in such a manner that magnetic poles of the first and second field magnets 32 and 34 are deviated from each other to set θ so that an efficient amount of the magnetic flux generated from the opposite magnetic poles does not exist.
Accordingly, it is possible to solve the problem of the magnet type electric motor according to the related art, such that the field of the first and second field magnets cannot be removed.

In the magnet type brushless generator according to this embodiment, even when the rotor 30 is driven so that the rpm changes from a low speed to a high speed, it is possible to uniformly control the output voltage of the generator and to stop the generation during rotation by controlling the relative rotation position of the second field magnet 34 with respect to the first field magnet 32 within a necessary rotation range (0 to θ).

Incidentally, while the preferred embodiment has described about the exemplary magnet type brushless generator, it is needless to say that the same advantage can be exhibited even in a magnet type brushless starter with the same configuration.
In addition, while the preferred embodiment has described about the exemplary case in which the second field magnet is used as a parallel rotor for a phase control and the internal gear of the first-stage planetary gear is controlled, the invention, of course, is not limited thereto.

## Claims

1. A magnet type brushless generator comprising:
a stator having a plurality of stator magnetic poles around which winding wires for generating a rotation magnetic field are wound;
a rotor having a first field magnet and a second field magnet disposed coaxially with the first field magnet in an opposed manner so as to be rotatable relative to the first field magnet; and
a planetary gear mechanism configured to control a relative rotation position of the first field magnet and the second field magnet.

2. The magnet type brushless generator according to claim 1, wherein the planetary gear mechanism has a planetary gear connected to the first field magnet and a planetary gear connected to the second field magnet.

3. The magnet type brushless generator according to claim 2, wherein each of the planetary gear connected to the first field magnet and the planetary gear connected to the second field magnet has an internal gear, and
wherein at least one of the internal gears is attached to an external power mechanism.

4. The magnet type brushless generator according to claim 3, wherein the external power mechanism is a servo motor.

5. A magnet type brushless starter comprising:
a stator having a plurality of stator magnetic poles around which winding wires for generating a rotation magnetic field are wound;
a rotor having a first field magnet and a second field magnet disposed coaxially with the first field magnet in an opposed manner so as to be rotatable relative to the first field magnet; and
a planetary gear mechanism configured to control a relative rotation position of the first field magnet and the second field magnet.

6. The magnet type brushless starter according to claim 5, wherein the planetary gear mechanism has a planetary gear connected to the first field magnet and a planetary gear connected to the second field magnet.

7. The magnet type brushless starter according to claim 6, wherein each of the planetary gear connected to the first field magnet and the planetary gear connected to the second field magnet has an internal gear, and
wherein at least one of the internal gears is attached to an external power mechanism.

8. The magnet type brushless starter according to claim 7, wherein the external power mechanism is a servo motor.
